# EUROPEAN PATENT SPECIFICATION

(11) **EP 3 430 497 B1**
(45) Date of publication and mention of the grant of the patent: **16.11.2022**
(21) Application number: 16782324.4
(22) Date of filing: 31.08.2016
(51) Int. Cl.: G06F 3/01, G06F 3/023, G06F 3/0488, G06F 3/04886

(54) **METHOD AND SYSTEM FOR REALIZING CHARACTER INPUT BY MEANS OF EYE MOVEMENT**
VERFAHREN UND SYSTEM ZUR ZEICHENEINGABE MITTELS AUGENBEWEGUNG
PROCÉDÉ ET SYSTÈME DESTINÉS À LA RÉALISATION D'UNE ENTRÉE DE CARACTÈRES AU MOYEN D'UN MOUVEMENT DE L' OEIL

(30) Priority: 18.03.2016 TR 201603526
(43) Date of publication of application: 23.01.2019
(73) Proprietor: Anadolu Universitesi, 26470 Eskisehir (TR)
(72) Inventor: TOPAL, Cihan, 26555 Tepebasi /Eskisehir (TR); BENLIGIRAY, Burak, 26555 Tepebasi /Eskisehir (TR)
(74) Representative: Handanoglu, Erdal
(86) International application number: PCT/TR2016/050318
(87) International publication number: WO 2017/160249

(56) References cited:
- EP-A1- 2 827 232
- WO-A1-2015/127325
- CIHAN TOPAL ET AL: "On the efficiency issues of virtual keyboard design", 2012 IEEE INTERNATIONAL CONFERENCE ON VIRTUAL ENVIRONMENTS HUMAN-COMPUTER INTERFACES AND MEASUREMENT SYSTEMS (VECIMS) PROCEEDINGS, 1 July 2012 (2012-07-01), pages 38-42, XP055328040, DOI: 10.1109/VECIMS.2012.6273205 ISBN: 978-1-4577-1757-4

## Description

### TECHNICAL FIELD

The present invention relates to a computer-based character input method and system for realizing said method where an on-screen keyboard interface, comprising key segments accommodating at least one typing character for providing the user to make typing by means of eye movements, is presented in a display unit, and where the typing character, provided in the key segment corresponding to the point on the display unit where the eye gazes at, is selected and presented to the user, in accordance with the data received from an eye tracking device which senses the position of the eye of the user gazing at said display unit.

### PRIOR ART

Typing by means eye movement is one of the most important needs of particularly physicallydisabled and paralyzed persons. Typing by means of eye movement is based on the interaction of the user with the computer by utilizing the point where the eye gazes on a screen by means of an image sensor directed to the eye.

Various systems are provided for typing by means of the eye. In the patent US2012086645, a system is disclosed where the frequently used words are arranged on a ring around a center and where the system uses an on-screen keyboard interface where the frequently used letters are provided on another ring inside said ring.

As another prior art document a patent application, WO2015127325A1, discloses methods for facilitating entry of user input into computing devices. It can be a method for facilitating data entry, via a user interface, using a virtual keyboard adapted to present an alphabet partitioned into subalphabets and/or in a QWERTY keyboard layout. In examples, display characteristics of one or more virtual keys may be altered and/or a subset of virtual keys with corresponding characters may be provided in the virtual keyboard layout based on a likelihood they may be used next by a user and/or a probability of them being used next by a user.

Another prior art document is a paper titled as "On the efficiency issues of virtual keyboard design", written by C. Topal, B. Benligiray and C. Akinlar.

This document proposes useful virtual keyboards with improvements in modal and functional properties. In this study, a couple of design issues for virtual keyboards to provide their efficient utilization with pointing devices is examined. Moreover the effects of visual key layout to the performance of virtual keyboards in connection with the statistical properties of the target language's vocabulary is analyzed.

Another prior art document is a patent application EP2827232 A1. It discloses character input device and character input method. The character input device includes: a display for displaying a plurality of character candidates for an input character; a use frequency database that accumulates, for each character, a first character use frequency of use as first character and a successive use frequency of at least one character used in succession to the character; a first character extractor that extracts a highly-ranked predetermined number of frequently-used characters used frequently as first character, based on first character use frequencies of respective characters; a successive use frequency extractor that extracts, for at least one frequently-used character, the successive use frequency of at least one character used in succession to the frequently-used character; and a display controller that displays the predetermined number of frequently-used characters as arranged in a center on the display and displays the characters other than frequently-used characters as arranged around the frequently-used characters, based on the successive use frequencies.

Eye tracking systems do not work as robust as the computer mouse. Due to reasons like the point gazed at, the sensitivity of the system used, light conditions, detection cannot be realized in an exact manner, and accordingly, convergence is made by means of any method. This leads to a jitter in the pointer location during the tracking. When a physical hardware which will realize the selection is not used, the user gazes at the target key for a specific duration, and the selection is realized. Particularly while small screen devices like mobile device, tablet are used, since the character amount is fixed and since the sizes of the characters on the screen are fixed, it becomes difficult to wait the pointer on the same key by the user due to the above mentioned technical problem.

As a result, because of all of the abovementioned problems, an improvement is required in the related technical field.

### BRIEF DESCRIPTION OF THE INVENTION

The present invention relates to method and system for realizing character input by means of eye movement, for eliminating the above mentioned disadvantages and for bringing new advantages to the related technical field.

The main object of the present invention is to provide method and system for realizing character input where the wrong character selections occurring due to the jitters which occur during character selection or the delays in character selection are reduced.

Another object of the present invention is to provide method and system for realizing character input where the speed of reaching the target character is increased.

Another object of the present invention is to provide method and system for realizing character input where the speed of word and character series typing is increased.

Another object of the present invention is to provide method and system for realizing character input where the amount of being affected due to the jitter occurring during character selection is reduced.

In order to realize all of the abovementioned objects and the objects which are to be deducted from the detailed description below, the present invention is a computer-based character input method in order to provide the user to type by means of eye movements, where, an on-screen keyboard interface, comprising key segments accommodating at least one typing character, is presented to a display unit, the typing character, provided in the key segment corresponding to a point where the eye gazes at the display unit, is selected and presented to the user in accordance with data taken from an eye tracking device which senses the eye position of the user gazing at said display unit. Accordingly, the improvement of the subject matter invention is that the user selects at least one character and forms a character series and afterwards, a word database is accessed comprising prerecorded words, in accordance with the word database; letters, of which a frequency of use after the selected character series is greater than a predetermined value, are determined as a first group, and letters, of which a frequency of use after the selected character series is lower than a predetermined value, are determined as a second group and thereby at least two groups are formed, the key segments comprising the characters provided in the second group, are removed from the on-screen keyboard interface, at least one of the key segments comprising the characters provided in the first group, is widened in a manner filling the areas emptied by the second group key segments removed from the on-screen keyboard interface. Thus, the sizes of the letters, of which the probability of use is high, on the onscreen keyboard interface are increased; and the effect of lighting problems or the effect of jitters occurring during determination of the gazing location by means of the convergence methods used in cases of insufficient sensitivity equipment usage is reduced. Moreover said method comprises, a circularly formed center area (221) comprising at least one key segment (21), having a typing character which has a frequency of occurring in said word database (40) greater than the predetermined value, is presented to said display unit (5),a first ring area (222) and a second ring area (223) which encircle said center area (221), each ring area comprising pluralities of the key segments (21) each having one typing character, are further presented to said display unit (5), wherein the typing characters are placed such that the frequently used ones are placed close to the center area and the rarely used ones are placed outwardly from the center area in accordance with the degree of the usage frequency.

In another preferred embodiment of the subject matter invention, in case the words input by the user are not existing in the word database, said word is recorded in the word database, and in case the words input by the user are existing in the word database, a usage frequency value is assigned to the selected word, and if the usage frequency value is already present, this usage frequency value is updated. Thus, the words selected by the user are recorded and they can be presented to the user in the future as primary recommendation.

In another preferred embodiment of the subject matter invention, in case one of the key segments comprising the characters provided in the first group is selected, after the preselected character series, a recommended word, of which the usage frequency is higher than a predetermined value with respect to a collection provided in the word database and comprising the character in this key segment, is added to the key segment. Thus, the user can select a recommended word without making additional eye movement. Moreover, excessive place occupation on the screen for the recommended word is prevented.

In another preferred embodiment of the subject matter invention, in case the user gazes at the key segment, comprising the recommended word, for duration longer than the predetermined duration, the recommended character series inside the key segment is selected and the selected character series is presented visually to the user.

### BRIEF DESCRIPTION OF THE FIGURES

Figure 1 is a representative view of the subject matter system.
Figure 2 is a representative and detailed view of the processor unit.
Figure 3a, 3b and 3c are representative views of the on-screen keyboard interface.

### REFERENCE NUMBERS

1- Eye tracking device
2 - On-screen keyboard interface
21- Key segment
22- Keyboard body
221- Center area
222- First ring area
223- Second ring area
3- Processor unit
4- Memory unit
40- Word database
41- On-screen keyboard module
42- Data receiving module
43- Segment determination module
44- Segment selection module
45- Typing module
46- Grouping module
47- Sizing module
48- Recommendation module
49- Record module
5- Display unit
6- Eye

### THE DETAILED DESCRIPTION OF THE INVENTION

In this detailed description, the subject matter system and method is explained with references to examples without forming any restrictive effect only in order to make the subject more understandable.

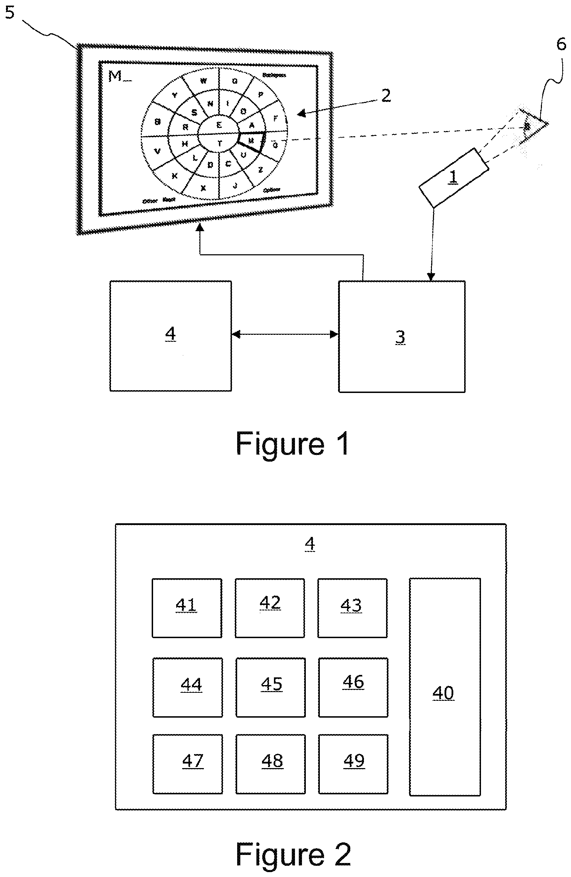

The character/typing character mentioned in this detailed description covers the letters and marks used in typing. The character series describes bringing together pluralities of characters. Incomplete words, syllables, abbreviations can be shown as an example to the character series. With reference to Figure 1, the system in said exemplary application comprises an eye tracking device (1) displaying the eye (6) of the user, a processor unit (3) evaluating the data received from the eye tracking device (1), a memory unit (4) connected to the processor unit (3), a display unit (5), and an on-screen keyboard interface (2) formed by the processor unit (3) on the display unit (5).

The processor unit (3) can be any general or special purpose processor. The memory unit (4) may comprise RAM, ROM, magnetic or optical hard disc or any data storage device combination which can be read by computer.

The operation of the system is realized by means of pluralities of functional modules placed in the memory unit (4) and formed by command sets executed by the processor unit (3).

The eye tracking device (1) is configured so as to sense the position of an eye (6) of the user and so as to transfer the related data to the processor unit (3) at specific periods. In more details, the eye tracking device (1) is a system comprising software and hardware which process the information obtained from the eye (6) and the periphery thereof by means of the sensors thereof and which measure the examined point or the activity of eye (6).

In an exemplary application, the eye tracking device (1) may be a camera. In another exemplary application, the eye tracking device (1) may comprise scleral searching coil positioned in the periphery of the eye (6) and which transfers the changes formed by eye (6) movements to the processor unit (3). Again, in an exemplary application, the eye tracking device (1) may comprise sensors configured for sending the position of the eye (6) by means of electro-oculography. In a possible application, the eye tracking device (1) may comprise light sensitive sensors and hardware comprising the suitable configurations of these sensors, and software which supports this. The subject matter character inputting method is described through an exemplary application where the eye tracking device (1) is a camera.

The display unit (5) is a screen which may present the images, formed by the processor unit (3), to the user visually.

The memory unit (4) comprises an on-screen keyboard module (41), a data receiving module (42), a segment determination module (43), a segment selection module (44), a typing module (45), a grouping module (46), a sizing module (47), a recommendation module (48) and a record module (49).

In order to provide the user to realize typing by means of gazing at the screen, the system, of which the details are described above, functions as follows:
The processor unit (3) transfers an on-screen keyboard interface (2), formed by means of the onscreen keyboard module (41), to the display unit (5) in order to be presented to the user. The onscreen keyboard interface (2) comprises key segments (21). The key segments (21) accommodate typing characters therein. Said key segments (21) are brought together and they form a keyboard body (22). The keyboard body (22) has a circular form. The typing characters are placed such that the frequently used ones are placed close to the center and the rarely used ones are placed outwardly from the center in accordance with the degree of the usage frequency. At the center of the keyboard body (22), a circularly formed center area (221) is defined. There is at least one key segment (21) at the center area (221). At the periphery of the center area (221), a first ring area (222) is defined which encircles the center area (221). Inside the first ring area (22), there are key segments (21) arranged at equal distances with respect to the center area (221). In the region defined as a second ring area (223) and encircling the first ring area (222), there are key segments (21) arranged in equal distances with respect to the center area (221). There is a character in each key segment (21). Said characters show difference in accordance with the languages, and they are placed in accordance with their usage frequencies. As the frequently used characters are placed close to the center, the speed of reaching of the user to the target characters is increased.

A word database (40) in the memory unit (4) may comprise pre-recorded words. Said word database (40) may moreover accommodate the collections formed for different languages. Said collections may also comprise words and they may also comprise the word groups formed by bringing pluralities of words one after the other. Besides, the word database (40) may also comprise the words entered by the user by means of the on-screen keyboard interface (2) and the usage frequencies related to these.

In more details, the processor unit (3) comprises a data receiving module (42). The data receiving module (42) receives the images, coming from the eye tracking device (1), at specific periods.

The segment determination module (43) determines the point on the display unit (5) gazed at by the user in accordance with the position of the eye (6), and the key segment (21) corresponding to this point. The character, provided in the determined key segment (21), is colored such that the user visually detects it, in order to be presented to the user. In a possible embodiment, there may be a pointer at the gazing location of the user, and this pointer may move by means of the movements of the eye (6) of the user.

In case the user gazes at a key segment (21) at a predetermined duration (in case predetermined amount of screen point marks the same key segment (21)), the segment selection module (44) selects the key segment (21) and the character in it. The selected character is typed to the image unit (5) by a typing module (45).

The grouping module (46) searches the selected typing character or the words comprising the character series formed by the selected character in the word database (40). This search is in the form of searching the words comprising character series selected in a sequenced manner as from the beginning. After the selected character series in the word database (40), the characters, placed at a predetermined frequency, are grouped as a first group, and the letters, which are not placed after the selected character series or placed at a lower frequency when compared with predetermined frequency, are grouped as a second group. In other words, the letters, which are highly probable to be selected by the user, are provided in the first group, and the letters, which are not highly probable to be selected by the user, are provided in the second group. This grouping can also be made by increasing the group numbers or by means of different methods. This grouping may be any method which recommends the next character to the user by comparing the character series input by the user or the words which may be formed by this character series. In the art, there are pluralities of methods which recommend characters or words to the user.

For instance, let us assume that a first character and a second character have been selected. Let us assume that the number of words, comprising the first and second characters sequentially as from the beginning and afterwards the third character, is 100. Let us assume that the number of words, comprising the first and second characters sequentially as from the beginning and afterwards the fourth character, is 0. In this case, since the probability of the user to select the third character after the first and second character is higher, the first character is provided in the first group and the fourth character is provided in the second group. This grouping may change depending on the usage frequency of the words in the language in accordance with the collection, the usage frequency by the user or the words input by the user beforehand.

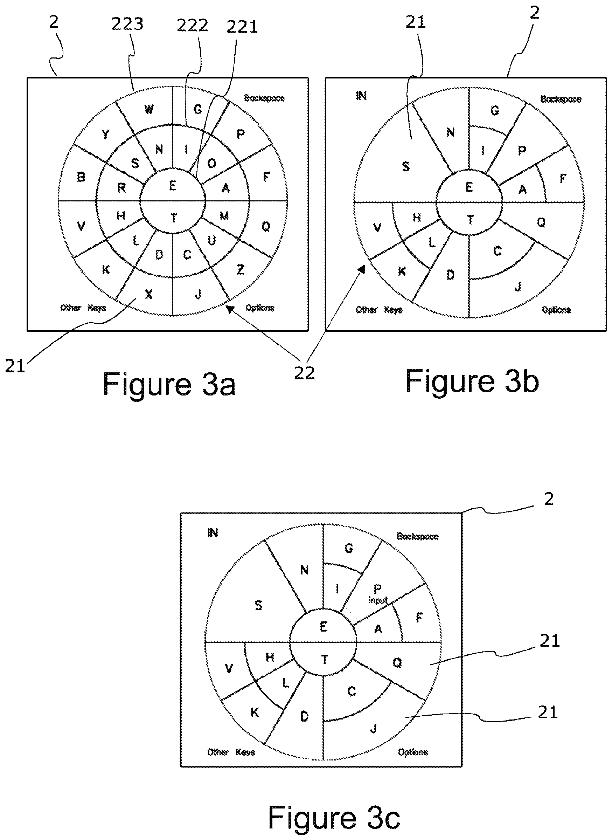

The sizing module (47) re-sizes the key segments (21) of the letters, separated into groups, on the on-screen keyboard interface (2). In a possible embodiment, the key segments (21), comprising the characters provided in the second group, are lost. The key segments (21), comprising the characters provided in the first group, are widened towards the regions emptied by the key segments (21) comprising the characters provided in the adjacent second group. In alternative embodiments, the groups with different numbers may change in accordance with the characters used at different frequencies. For instance, if the letters, used frequently, less frequently and rarely, are separated into 3 different groups, the letters used rarely may be erased by means of the on-screen keyboard interface (2) together with the key segments (21); while the key segments (21) of the characters used less frequently are kept fixed, the key segments (21) of the characters used frequently may be widened towards the key segments (21) of the erased characters. In another embodiment, the key segments (21) comprising the frequently used characters which do not have adjacent erased key segment (21) may be kept fixed. As a result, while the key segment (21) areas, classified so as to have a higher usage probability after the character series selected from the characters separated into at least two groups, are widened, the key segment (21) areas of the letter characters classified so as to have a lower usage probability are at least partially narrowed, and when required, they are completely erased. In Figure 3a, the form of the onscreen keyboard interface (2), where any typing character selection has not been made, is illustrated. On the view of the on-screen keyboard interface (2) illustrated in Figure 3b, the selection of the "IN" character series has been realized. The ones which are not much probable to be selected as a next typing character have been erased, in other words, in the words provided in the word database (40), the typing characters (for instance, Y, B, R), of which the application amount of the "IN" character series is substantially lower than the predetermined values, have been erased, and the key segments (21) accommodating the typing characters have been erased. In the word database (40), the key segments (21) of the letter characters (for instance, S), of which the application amount thereof is substantially higher than the predetermined values, have been widened towards the areas of the key segments (21) of the erased letter characters. The key segments (21) of the typing characters (for instance, V, H, L, K), of which the application amount after the "IN" character series is close to the predetermined value, have been kept in the same size, in other words, the key segments (21) of the typing characters, provided between the ones which are highly probable and the ones which are not highly probable to be applied after the "IN" character series, have been kept in the same size.

The recommendation module (48) adds a recommended word, which may be obtained by means of the character series formed by the finally selected letter character, to the key segment (21) of the selected character. When a predetermined duration is waited once more on the selected character, the word provided inside the key segment (21) of the selected character, is accepted as selected, and the typing module (45) realizes the presentation process, in other words, the typing process of the selected word on the screen. For instance, following Figure 3b, when the P typing character is waited during a predetermined duration after the "IN" character series in Figure 3c, the typing character P is selected. When the typing character P is added to the character series "IN" into the key segment (21) of the typing character P, the word "INPUT", which is most highly probable to be formed, is added. Also in case the user gazes at the key segment (21) of the typing character P for a predetermined duration, the word "INPUT" is selected. After a word is selected, if the word, of which a record module (49) is selected, is a word which has not been used beforehand, the word is recorded to the database (40). If the selected word is a pre-used word, the word database (40) is updated such that the recommendation priority increases after the selected preamble.

As a result, in case the on-screen keyboard interface (2) has a circular form and the frequently used typing characters are placed close to the center of the keyboard body (22), the user can realize passage between the typing characters in a more rapid manner. In accordance with the Fitts's law, during the interaction of the user with a computer, the duration of reaching the target is a function depending on the distance of the target and the size of the object. The placement of frequently used typing characters to the center of the keyboard body (22) provides the distance of the target typing characters with respect to the beginning point of the user's glance to be shorter when compared with the identical on¬screen keyboards. Moreover, the reduction of the key segments (21) of the typing characters, which are not probable to be used under normal conditions or which have very low probability to be used, increases the speed of reaching the target character by means of widening of the key segments (21) comprising typing characters which have high probability to be used after the selected character series.

The protection scope of the present invention is set forth in the annexed claims.

## Claims

1. A computer-based character input method in order to provide a user to type by means of eye (6) movements, where,
an on-screen keyboard interface (2), comprising key segments (21) accommodating at least one typing character, is presented to a display unit (5),
the typing character, provided in the key segment (21) corresponding to a point where the eye (6) gazes at the display unit (5), is selected and presented to the user in accordance with data taken from an eye tracking device (1) which senses the eye (6) position of the user gazing at said display unit (5),
the user selects at least one character and forms a character series and afterwards, a word database (40) is accessed comprising prerecorded words,
in accordance with the word database (40); letters, of which a frequency of use after the selected character series is greater than a predetermined value, are determined as a first group, and letters, of which a frequency of use after the selected character series is lower than a predetermined value, are determined as a second group and thereby at least two groups are formed,
the key segments (21) comprising the characters provided in the second group are removed from
the on-screen keyboard interface (2),
at least one of the key segments (21) comprising the characters provided in the first group, is widened in a manner filling the areas emptied by the second group key segments (21) removed from the on-screen keyboard interface (2),
said method is **characterized by comprising;**
a circularly formed center area (221) comprising at least one key segment (21), having a typing character which has a frequency of occurring in said word database (40) greater than the predetermined value, is presented to said display unit (5), a first ring area (222) and a second ring area (223) which encircle said center area (221), each ring area comprising pluralities of the key segments (21) each having one typing character, are further presented to said display unit (5), wherein the typing characters are placed such that the frequently used ones are placed close to the center area and the rarely used ones are placed outwardly from the center area in accordance with the degree of the usage frequency.

2. A character inputting method according to Claim 1, wherein in case the words input by the user are not existing in the word database (40), said word is recorded in the word database (40), and in case the words input by the user are existing in the word database (40), a usage frequency value is assigned to the selected word, and if the usage frequency value is already present, this usage frequency value is updated.

3. A character inputting method according to Claim 1, wherein in case one of the key segments (21) comprising the characters provided in the first group is selected, after the pre-selected character series, a recommended word, of which the usage frequency is higher than a predetermined value with respect to a collection provided in the word database (40) and comprising the character in this key segment (21), is added to the key segment (21).

4. A character inputting method according to Claim 3, wherein in case the user gazes at the key segment (21), comprising the recommended word, for a duration longer than the predetermined duration, the recommended character series inside the key segment (21) is selected and the selected character series is presented visually to the user.

## Patentansprüche

1. Computergestütztes Zeicheneingabeverfahren, um einem Benutzer das Tippen mittels Augenbewegungen (6) zu ermöglichen, wobei
eine die Tastensegmente (21) umfassende Bildschirmtastaturschnittstelle (2), die mindestens ein Tippzeichen anpassen, einer Anzeigeeinheit (5) präsentiert wird,
wobei das in dem Tastensegment (21) vorgesehene Tippzeichen, das einem Punkt entspricht, an dem das Auge (6) auf die Anzeigeeinheit (5) blickt, ausgewählt und dem Benutzer entsprechend den Daten präsentiert wird, die von einer Augenverfolgungsvorrichtung (1) genommen werden, die die Position des Auges (6) des auf die genannten Anzeigeeinheit (5) blickenden Benutzers erfasst, der Benutzer wählt mindestens ein Zeichen aus und bildet eine Zeichenfolge und anschließend auf eine Wortdatenbank (40) zugegriffen wird,
das voraufgezeichnete Wörter umfasst,
gemäß der Wortdatenbank (40); Buchstaben, deren Verwendungshäufigkeit nach der ausgewählten Zeichenfolge größer als ein vorbestimmter Wert ist, werden als eine erste Gruppe bestimmt, und Buchstaben, deren Verwendungshäufigkeit nach der ausgewählten Zeichenfolge kleiner als ein vorbestimmter Wert ist, werden bestimmt als zweite Gruppe und dadurch mindestens zwei Gruppen gebildet werden, die Tastensegmente (21), die die in der zweiten Gruppe bereitgestellten Zeichen umfassen, von der Bildschirmtastaturschnittstelle (2) entfernt werden,
mindestens eines der Tastensegmente (21), das die in der ersten Gruppe bereitgestellten Zeichen umfasst, wird derart erweitert, dass es die Bereiche ausfüllt, die durch die Tastensegmente (21) der zweiten Gruppe geleert wurden,
die von der Bildschirmtastaturschnittstelle (2) entfernt wurden,
das genannte Verfahren **ist dadurch gekennzeichnet, dass** es ein kreisförmig geformter Mittelbereich (221), der mindestens ein Tastensegment (21) mit einem Tippzeichen umfasst, dessen Häufigkeit in der genannten Wortdatenbank (40) größer als der vorbestimmte Wert ist, der Anzeigeeinheit (5) präsentiert wird,
ein erster Ringbereich (222) und ein zweiter Ringbereich (223), die den Mittelbereich (223) umschließen, wobei jeder Ringbereich eine Vielzahl von Tastensegmenten (21) umfasst, die jeweils ein Schreibzeichen aufweisen, werden der genannten Anzeigeeinheit (5) dargeboten, wobei die Schreibzeichen so angeordnet sind, dass die häufig verwendeten in der Nähe des Mittelbereichs angeordnet sind und die selten verwendeten außerhalb des Mittelbereichs in Übereinstimmung mit dem Grad der Benutzungshäufigkeit angeordnet sind.

2. Zeicheneingabeverfahren nach Anspruch 1 wird das genannte Wort in der Wortdatenbank (40) gespeichert, falls die vom Benutzer eingegebenen Wörter nicht in der Wortdatenbank (40) vorhanden sind, und
falls die vom Benutzer eingegebenen Wörter in der Wortdatenbank (40) vorhanden sind, ein Verwendungshäufigkeitswert wird dem ausgewählten Wort zugewiesen, und wenn der Verwendungshäufigkeitswert bereits vorhanden ist, dieser Verwendungshäufigkeitswert wird aktualisiert.

3. Zeicheneingabeverfahren nach Anspruch 1, wobei in dem Fall, dass eines der Tastensegmente (21),
das die in der ersten Gruppe bereitgestellten Zeichen umfasst, ausgewählt wird, nach der vorgewählten Zeichenreihe wird ein empfohlenes Wort, dessen Verwendungshäufigkeit größer als ein vorbestimmter Wert in Bezug auf eine Sammlung ist, die in der Wortdatenbank (40) bereitgestellt ist und das Zeichen in diesem Schlüsselsegment (21) umfasst, zu dem Schlüsselsegment (21) hinzugefügt.

4. Ein Zeicheneingabeverfahren nach Anspruch 3, bei dem in dem Fall, dass der Benutzer das Tastensegment (21), das das empfohlene Wort enthält, länger als die vorbestimmte Dauer anschaut, die empfohlene Zeichenserie wird innerhalb des Tastensegments (21) ausgewählt und die ausgewählte Zeichenserie wird dem Benutzer visuell präsentiert.

## Revendications

1. Une méthode de saisie de caractères basée sur ordinateur afin de permettre à un utilisateur de taper des caractères par des mouvements des yeux (6), où,
une interface de clavier visuel (2), comprenant des segments de clavier (21) contenant au moins un un caractère à taper, est introduite dans une unité d'affichage (5),
le caractère tapé, disposé dans le segment de clavier (21) situé à un point où l'oeil (6) regarde l'unité d'affichage (5), le caractère à taper est sélectionné et offert à l'utilisateur conformément aux données provenant d'un dispositif de suivi du regard (1) qui détecte la position des yeux (6) de l'utilisateur regardant cette unité d'affichage. (5),
l'utilisateur sélectionne au moins un caractère et forme une série de caractères et ensuite, une base de données de mots (40) comprenant des mots préenregistrés est mise à disposition, selon la base de données de mots (40); les lettres, dont la fréquence d'utilisation après la série de caractères sélectionnée est plus élevée qu'une valeur prédéterminée, sont considérées comme un premier groupe, et les lettres, dont la fréquence d'utilisation après la série de caractères sélectionnée,
est plus faible qu'une valeur prédéterminée, sont considérées comme un deuxième groupe, ce qui permet de constituer au moins deux groupes,
les segments de clavier (21) contenant les caractères disposés dans le deuxième groupe sont enlevés de l'interface de clavier visuel. (2),
au moins l'un des segments de clavier (21) contenant les caractères disposés dans le premier groupe, est élargi de telle manière qu'il remplit les zones vidées par les segments de clavier (21) du deuxième gnupe
enlevés de l'interface clavier visuel. (2),
Cette méthode est **caractérisée par les points suivants;**
une zone centrale de forme circulaire (221) contenant au moins un segment de clavier (21), ayant un caractère à taper dont la fréquence d'apparition dans cette base de données de mots (40) est plus élevée que la valeur prédéterminée, est mise à disposition de l'unité d'affichage (5),
une première zone circulaire (222) et une seconde zone circulaire (223) qui encerclent cette zone centrale (221), chaque zone circulaire contenant des pluralités de segments de clavier (21), chacun ayant un caractère à taper, sont également présentées à cette
les caractères à taper sont placés de manière à ce que ceux qui sont fréquemment utilisés soient situés accordance à proximité de la zone centrale et que ceux qui sont rarement utilisés soient situés hors de la zone centrale selon le degré de fréquence d'utilisation.

2. Une méthode de saisie de caractères selon la Réclamation 1, où, dans le cas où les mots saisis par l'utilisateur n'existent pas dans la base de données de mots (40), ledit mot est enregistré dans la base de données de mots (40), et dans le cas où les mots saisis par l'utilisateur existent dans la base de données de mots (40), une valeur de fréquence d'utilisation est attribuée au mot sélectionné, et si la valeur de fréquence d'utilisation est déjà présente, cette valeur de fréquence d'utilisation est mise à jour.

3. Une méthode de saisie de caractères selon la Réclamation 1, où dans le cas où un des segments clés (21) contenant les caractères fournis dans le premier groupe est sélectionné, après la série de caractères présélectionnés, un mot recommandé, dont la fréquence d'utilisation est plus élevée qu'une valeur prédéterminée par rapport à une collection fournie dans la base de données de mots (40) et contenant le caractère dans ce segment clé (21), est ajouté au segment clé (21).

4. Une méthode de saisie de caractères selon la Réclamation 3, où dans le cas où l'utilisateur regarde le segment de clavier (21), contenant le mot recommandé, pendant une durée plus longue que la durée prédéterminée, la série de caractères recommandée à l'intérieur du segment de clavier (21) est sélectionnée et la série de caractères sélectionnée est affichée visuellement à l'utilisateur.
